# FASCICULE DE BREVET EUROPEEN

(11) **EP 3 906 210 B1**
(45) Date de publication et mention de la délivrance du brevet: **01.03.2023**
(21) Numéro de dépôt: 20705401.6
(22) Date de dépôt: 06.01.2020
(51) Int. Cl.: B66F 9/06, G05D 1/02

(54) **ÉQUIPEMENT DE MANUTENTION AUTOGUIDÉ COMPORTANT UN MOYEN DE DÉTECTION**
SELBSTGEFÜHRTE HANDHABUNGSVORRICHTUNG MIT EINER DETEKTIONSVORRICHTUNG
SELF-GUIDED HANDLING APPARATUS COMPRISING A DETECTION MEANS

(30) Priorité: 04.01.2019 FR 1900082
(43) Date de publication de la demande: 10.11.2021
(73) Titulaire: BALYO, 94200 Ivry-sur-Seine (FR)
(72) Inventeur: VOISIN, Guillaume, 93160 NOISY-LE-GRAND (FR); DUVAL, Thomas, 75014 PARIS (FR); BARDINET, Fabien, 92130 ISSY-LES-MOULINEAUX (FR)
(74) Mandataire: IP Trust
(86) Numéro de dépôt international: PCT/FR2020/050008
(87) Numéro de publication internationale: WO 2020/141288

(56) Documents cités:
- WO-A1-2019/002918
- US-A1- 2013 190 963
- US-A1- 2018 319 594
- DIRK HOLZ ET AL: "Continuous 3D sensing for navigation and SLAM in cluttered and dynamic environments", INFORMATION FUSION, 2008 11TH INTERNATIONAL CONFERENCE ON, IEEE, PISCATAWAY, NJ, USA, 30 juin 2008 (2008-06-30), pages 1-7, XP031326424, ISBN: 978-3-8007-3092-6
- SICK Sensor Intelligence: "NAV series PRECISE LASER NAVIGATION FOR MAXIMUM EFFICIENCY 2D laser scanners", , 1 décembre 2016 (2016-12-01), pages 1-20, XP055634198, Extrait de l'Internet: URL:https://cdn.sick.com/media/docs/7/87/7 87/Product_information_NAV_series_en_IM004 4787.PDF [extrait le 2019-10-21]

## Description

### Domaine de l'invention

La présente invention concerne le domaine des véhicules à guidage automatique (AGV) et de la sécurité de fonctionnement de tels véhicules, équipés de nombreux capteurs de sécurité pour fournir les informations à un calculateur commandant les déplacements en veillant à limiter les risques pour l'homme, la machine et la charge.

Bien que les véhicules à guidage automatique ne se déplacent que sur les espaces qui leur sont affectés, il peut y avoir des situations dans lesquelles quelqu'un traverse la route par inadvertance. Dans ces cas, le système de sécurité complet certifié initie un freinage immédiat. Un élément clé du système est constitué par les capteurs de protection individuelle - équipés d'un champ d'avertissement et d'un champ de protection - qui surveillent en permanence les abords directs de l'AGV. Si une personne entre dans le champ d'avertissement, le chariot ralentit immédiatement. Si la personne reste devant l'appareil, il s'arrête et un signal est transmis au centre de contrôle indiquant le blocage du chariot.

Tous les AGV détectent également les objets qui peuvent être situés sur les côtés du chariot le long de son trajet. Les scrutateurs laser latéraux permettent de détecter ces objets à l'avance. En outre, ils servent de fonctionnalité supplémentaire dans les virages. Les capteurs identifient les objets qui pourraient toucher l'extérieur du chariot dans les virages. Si c'est le cas, ils assurent un arrêt du chariot avant tout contact.

Une sécurité supplémentaire est fournie par le capteur "en rideau". L'objectif du rideau de détection est de détecter les objets situés au-dessus et au-dessous du niveau de détection du capteur de protection individuelle et d'éviter une collision avec ces objets. Par exemple, il peut détecter les palettes et les charges qui dépassent trop du rayonnage. Le capteur rideau ne fonctionne pas seulement lorsque vous roulez tout droit, il "regarde" aussi vers l'avant dans les virages.

### État de la technique

On connaît dans l'état de la technique la demande WO2019002918 décrivant un procédé de commande d'un véhicule comprenant les étapes consistant :
a) à utiliser des moyens de transmission de déplacement et de transport pour déplacer et à transporter des objets (O),
b) à utiliser un moyen capteur pour détecter la position du véhicule et le déplacement d'objets (O),
c) à utiliser une unité de microprocesseur connectée au moyen de transmission de déplacement (3) et au moyen capteur,
d) à installer un produit informatique contenant un algorithme et un fichier contenant une mission d'exploitation (M) définie par un trajet (R) ayant une trajectoire (T) et des étapes de déplacement (H) dans la mémoire de l'unité, e) à extraire le fichier par un opérateur pour reproduire la mission (M) correspondant au fichier.

On connaît aussi dans l'état de la technique le brevet américain US8169596 décrivant un véhicule comportant un système de balayage multi-plan. Le véhicule comprend un contrôleur couplé de manière opérationnelle à un mécanisme d'entraînement. Le système de balayage multi-plan comprend un scanner de distance laser couplé au contrôleur ; un support configuré pour être fixé dans une orientation fixe par rapport au scanner de distance à laser et un bloc miroir agencé pour recevoir un signal de balayage du scanner à distance laser et pour réfléchir le signal de balayage dans une pluralité de directions afin de créer plusieurs plans de balayage. Le scanner de distance laser est configuré pour recevoir un signal des multiples plans de balayage, pour communiquer le signal au contrôleur en tant que signal de détection, et le contrôleur modifie le fonctionnement du véhicule en réponse au signal de détection.

Le brevet EP0768541B1 décrit un procédé de détection de personnes et/ou objets dans l'environnement immédiat d'un dispositif automatique mobile au moyen d'un détecteur installé sur le dispositif mobile afin de couvrir un champ spatial de détection déterminé et produire un signal de détection pour commander le dispositif automatique mobile précité, caractérisé en ce qu'il comprend les étapes suivantes :
- le signal de détection est mesuré en fonction du mouvement du dispositif mobile en l'absence d'obstacle,
- l'évolution dudit signal est mémorisée dans une mémoire électronique pour servir de courbe de référence,
- la valeur du signal de détection utile est mesurée en permanence et comparée à la valeur correspondante de la courbe de référence précitée,
- l'écart entre la valeur mesurée du signal utile et la valeur correspondante de la courbe de référence est utilisé pour indiquer la présence d'un obstacle formé par une personne et/ou un objet dans le champ de détection.

La demande de brevet EP2041515 décrit un système et procédé de mesure d'un nuage de points 3-D basé sur lidar comprenant une base, un logement, une pluralité d'émetteurs et de détecteurs contenus à l'intérieur du logement, un moteur rotatif qui fait tourner le logement autour de la base et un composant de communication qui permet la transmission des signaux générés par les détecteurs de photons vers les composants externes.

Le brevet US5586620 décrit un autre exemple de chariot élévateur à fourche comprenant un capteur de hauteur de la fourche, situé dans la fourche, loin du mât vertical, servant à déterminer la hauteur réelle de cette fourche, ainsi qu'un système d'observation comprenant un ensemble à une ou plusieurs caméras, qui peut prendre plusieurs formes.

Le brevet US2018319594 décrit un système de gestion d'un inventaire de rouleaux de tapis dans un entrepôt comprend un ou plusieurs chariots élévateurs autonomes, une base de données configurée pour stocker des informations d'emplacement pour une pluralité de rouleaux de tapis dans l'entrepôt, un serveur en communication électronique avec la base de données, et un gestionnaire de système configuré pour envoyer une ou plusieurs consignes au ou aux chariots élévateurs.

On connaît aussi l'article Holz, Dirk & Lorken, C. & Surmann, Hartmut. (2008). Continuous 3D sensing for navigation and SLAM in cluttered and dynamic environments. Information Fusion - INFFUS. 1 - 7.ISBN 9788_3_8007_3092-6

On connaît aussi le produit SICK Sensor Intelligence URL
cdn.sick.com/media/docs/7/87/787/Product_information_NAV_serie s_en_IM0044787.pdf

On connaît enfin le brevet US2013190963 exposant que, lorsqu'un véhicule industriel guidé de manière autonome se déplace dans une installation, des images de l'environnement adjacent sont acquises, soit par une caméra fixe, soit par une caméra vidéo. Un fichier image contenant une pluralité d'images est stocké à bord du véhicule. Au cours de ce voyage, l'emplacement du véhicule est déterminé. Lors de l'apparition d'un incident prédéfini, tel que la rencontre d'un obstacle ou l'impact d'un objet, un message d'incident est transmis sans fil du véhicule à un ordinateur de gestion à distance. Le message d'incident contient une indication du type d'incident, une indication d'un emplacement du véhicule et la pluralité des images. L'ordinateur de gestion à distance répond au message d'incident en fournissant une notification concernant l'incident à une ou plusieurs personnes.

### Inconvénients de l'art antérieur

Les solutions de l'art antérieur ne sont pas satisfaisantes car le positionnement du télémètre laser en un point élevé du véhicule à guidage autonome, généralement au sommet d'un mat, conduit à des zones masquées par certaines parties du véhicule. Il s'agit par exemple de la zone située devant le véhicule, masquée par le carrossage du véhicule ou de la zone arrière ou encore les fourches d'un équipement de manutention.

### Solution apportée par l'invention

Afin de remédier à cet inconvénient, l'invention concerne selon son acception la plus générale une équipement de manutention autoguidé comportant un moyen de détection [et de caractérisation] d'obstacles comportant un moyen de télémétrie disposé au sommet d'un mat caractérisé en ce que ledit moyen de télémétrie comporte un premier laser assurant un balayage horizontal sur 360° avec une ouverture de ±15°, et au moins un second laser présentant une ouverture de -15 à -80° et assurant un balayage d'au moins 270°, ledit moyen de détection comprenant un calculateur exploitant le nuage de points télémétriques pour détecter les obstacles et commander la modification du déplacement dudit équipement.

### Description détaillée d'un exemple non limitatif de l'invention

La présente invention sera mieux comprise à la lecture de la description détaillée d'un exemple non limitatif de l'invention qui suit, se référant aux dessins annexés où :
- La figure 1 représente une vue schématique d'un équipement selon l'invention
- La figure 2 représente une vue schématique des surfaces balayés.

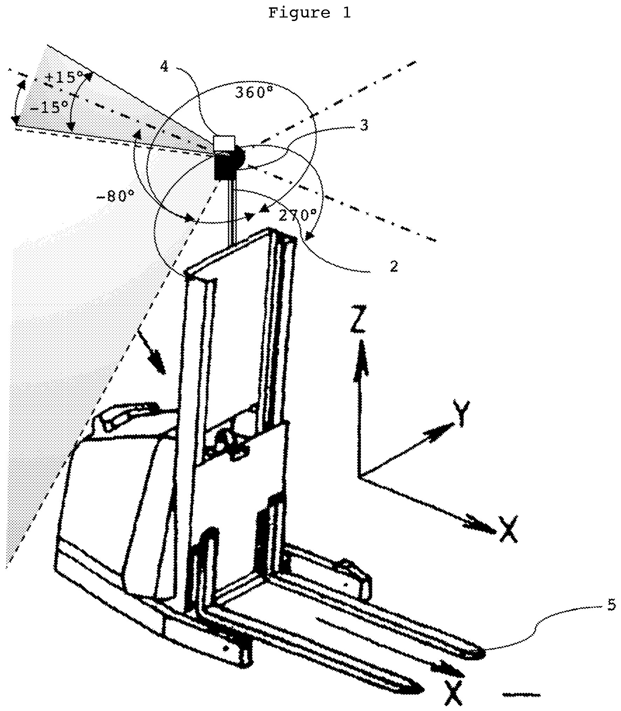

La figure 1 représente une vue schématique d'un chariot de manutention à fourches muni d'un mat (2) supportant :
- un premier laser (4) assurant un balayage horizontal sur 360° avec une ouverture de ±15° par rapport au plan horizontal
- au moins un second laser (3) assurant un balayage sur une section complémentaire de -15 à -80° par rapport au plan horizontal, avec un balayage horizontal sur 270° pour la zone non masquée par les fourches de préhension (5).

Le second balayage peut aussi être constitué d'une pluralité de systèmes d'imagerie fixe répartis dans le plan horizontal, autour du mat (2), pour couvrir une portion de la zone s'étendant verticalement entre -15 et -80° et sur 270° horizontalement.

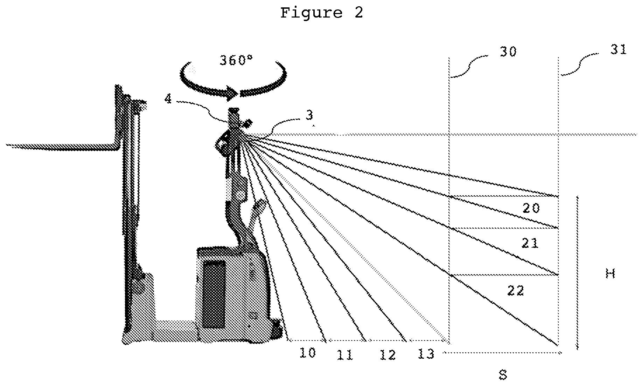

La figure 2 représente les surfaces balayées par les lasers (3) dans le plan horizontal (10 à 13), avec des pas de 20 centimètres, et dans le plan vertical (20 à 22) sur une hauteur H.

Le principe est d'obtenir une hauteur H de détection la plus haute et une surface au sol S non balayée la plus petite possible, de ce fait tout objet traversant la zone comprise entre les plans (30) et (31).

Le second laser (3) est de préférence un scanner laser permettant de créer très rapidement, à une vitesse de l'ordre de 976 000 points par seconde, une copie virtuelle de la scène, du bâtiment ou de l'objet à numériser. Les nuages de points ainsi recueillis sont assemblés par la suite en agence grâce à un logiciel spécifique qui utilise les références (sphères, damiers, plans naturels, ...) qui ont été disposées ou choisies au sein des scènes à numériser.

Le modèle 3D ainsi élaboré est doté d'une précision élevée (1 mm à 15 m). Il bénéficie également des informations de couleur recueillies par l'appareil photo couleur embarqué (70 megapixels sans parallaxe).

## Revendications

1. - Équipement de manutention autoguidé comportant un moyen de détection d'obstacles comportant un moyen de télémétrie disposé au sommet d'un mat, ledit moyen de détection comprenant un calculateur exploitant le nuage de points télémétrique pour détecter les obstacles et commander la modification du déplacement dudit équipement, **caractérisé en ce que** ledit
moyen de télémétrie comporte un premier laser (4) assurant un balayage horizontal sur 360° avec une ouverture de ±15° par rapport au plan horizontal, et au moins un second laser (3) présentant une ouverture de -15 à -80° et assurant un balayage d'au moins 270°.

2. - Équipement de manutention autoguidé selon la revendication 1 **caractérisé en ce que** ledit second laser (3) est un scanner laser.

## Patentansprüche

1. Selbstgesteuerte Handhabungsausrüstung, die ein Mittel zur Erfassung von Hindernissen aufweist, das ein an der Spitze eines Mastes angeordnetes Telemetriemittel aufweist, wobei das Mittel zur Erfassung einen Rechner umfasst, der die Telemetriepunktwolke auswertet, um die Hindernisse zu erfassen und die Bewegungsänderung der Ausrüstung zu steuern, **dadurch gekennzeichnet, dass** das Telemetriemittel einen ersten Laser (4), der eine horizontale Abtastung über 360° mit einer Öffnung von ±15° in Bezug auf die horizontale Ebene sicherstellt, und mindestens einen zweiten Laser (3) aufweist, der eine Öffnung von -15 bis -80° vorweist und eine Abtastung von mindestens 270° sicherstellt.

2. Selbstgesteuerte Handhabungsausrüstung nach Anspruch 1, **dadurch gekennzeichnet, dass** der zweite Laser (3) ein Laserscanner ist.

## Claims

1. Self-guided handling apparatus comprising an obstacle detection means which comprises a telemetry means arranged at the top of a mast, said detection means comprising a computer using the telemetric scatter plot to detect the obstacles and control the change in movement of said apparatus, **characterized in that** said telemetry means comprises a first laser (4) providing horizontal scanning over 360° with an aperture of ±15° with respect to the horizontal plane, and at least one second laser (3) having an aperture of -15 to -80° and providing scanning of at least 270°.

2. Self-guided handling apparatus according to claim 1, **characterized in that** said second laser (3) is a laser scanner.
